# EUROPEAN PATENT APPLICATION

(11) **EP 3 882 004 A1**
(43) Date of publication of application: **22.09.2021**
(21) Application number: 21158536.9
(22) Date of filing: 22.02.2021
(51) Int. Cl.: B29C 64/118, B29C 64/209, B29C 64/236, B29C 64/241, B33Y 30/00, B22F 10/00, B22F 12/00, B29C 48/00

(54) **SYSTEM AND METHOD FOR OPERATING A MULTI-NOZZLE EXTRUDER DURING ADDITIVE MANUFACTURING**

(30) Priority: 09.03.2020 US 202016812779
(71) Applicant: Xerox Corporation, Webster, NY 14580 (US)
(72) Inventor: MANTELL, David A., Rochester, NY 14610 (US); LYNN, Christopher G., Wolcott, NY 14590 (US); O'NEIL, Jason, Rochester, NY 14610 (US); GUGGILAPU, Priyaanka D., Webster, NY 14580 (US); NYSTROM, Peter J., Webster, NY 14580 (US)
(74) Representative: Gill Jennings & Every LLP

(57) **Abstract**

An additive manufacturing system (100) has a controller (128) configured to operate an actuator to move a multi-nozzle extruder in an XY plane and rotate the multi-nozzle extruder about an axis perpendicular to the XY plane while operating the multi-nozzle extruder to form swaths in the XY plane. The controller (128) operates the actuator and the multi-nozzle extruder to keep the nozzles of the multi-nozzle extruder within perimeters formed for an object and to vary the speed and rotation of the multi-nozzle extruder while extruding material to form precise structures.

## Description

### TECHNICAL FIELD

This disclosure is directed to multi-nozzle extruders used in three-dimensional object printers and, more particularly, to the formation of different structures with such extruders.

### BACKGROUND

Three-dimensional printing, also known as additive manufacturing, is a process of making a three-dimensional solid object from a digital model of virtually any shape. Many three-dimensional printing technologies use an additive process in which an additive manufacturing device forms successive layers of the part on top of previously deposited layers. Some of these technologies use extruders that soften or melt extrusion material, such as ABS plastic, into thermoplastic material and then emit the thermoplastic material in a predetermined pattern. The printer typically operates the extruder to form successive layers of the thermoplastic material that form a three-dimensional printed object with a variety of shapes and structures. After each layer of the three-dimensional printed object is formed, the thermoplastic material cools and hardens to bond the layer to an underlying layer of the three-dimensional printed object. This additive manufacturing method is distinguishable from traditional object-forming techniques, which mostly rely on the removal of material from a work piece by a subtractive process, such as cutting or drilling.

Many existing three-dimensional printers use a single extruder that extrudes material through a single nozzle. The printhead moves in a predetermined path to emit the build material onto selected locations of a support member or previously deposited layers of the three-dimensional printed object based on model data for the three-dimensional printed object. However, using a printhead with only a single nozzle to emit the build material often requires considerable time to form a three-dimensional printed object. Additionally, a printhead with a larger nozzle diameter can form three-dimensional printed objects more quickly but loses the ability to emit build material in finer shapes for higher detailed objects while nozzles with narrower diameters can form finer detailed structures but require more time to build three-dimensional objects.

To address the limitations of single nozzle extruders, multi-nozzle extruders have been developed. In these multi-nozzle extruders, the nozzles are formed in a common faceplate and the materials extruded through the nozzles can come from one or more manifolds. In extruders having a single manifold, all of the nozzles extrude the same material, but the fluid path from the manifold to each nozzle can include a valve that is operated to open and close the nozzles selectively. This ability enables the shape of a swath of thermoplastic material extruded from the nozzles to be varied by changing the number of nozzles extruding material and which ones are extruding material. In extruders having different manifolds, each nozzle can extrude a different material with the fluid path from one of the manifolds to its corresponding nozzle including a valve that can be operated to open and close the nozzle selectively. This ability enables the composition of the material in a swath to vary as well as the shape of the swath of thermoplastic material extruded from the nozzles to be varied. Again, these variations are achieved by changing the number of nozzles extruding material and selecting which nozzles extrude material. These multi-nozzle extruders enable different materials to be extruded from different nozzles and can be used to form an object without having to coordinate the movement of different extruder bodies. These different materials can enhance the ability of the additive manufacturing system to produce objects with different colors, physical properties, and configurations. Additionally, by changing the number of nozzles extruding material, the size of the swaths produced can be altered to provide narrow swaths in areas where precise feature formation is required, such as object edges, and to provide broader swaths to quickly form areas of an object, such as its interior regions.

In these multi-nozzle extruders having their nozzles in a common faceplate, the movement of the faceplate with reference to the build platform as well as the orientation of the faceplate with respect to the XY axes of the platform are critical to the formation of a swath. As used in this document, a "swath" refers to the extrusion of thermoplastic material from any opened nozzle in a multi-nozzle extruder as an aggregate as long as at least one nozzle remains open and thermoplastic material is extruded from any opened nozzle. That is, even if multiple nozzles are opened, but not all of the emitted extrusions contact one another, the discrete extrusions still constitute a swath. A contiguous swath is one in which all of the extrusions from multiple nozzles are in contiguous contact across the swath in a cross-process direction.

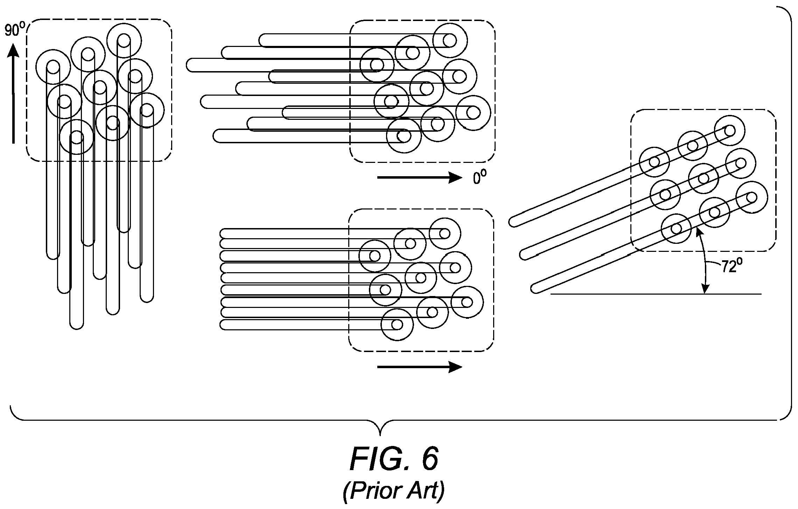

At some orientations of the extruder, some of the nozzles align with one another in a way that may prevent a contiguous swath of extruded material from being formed. As shown in FIG. 6, a previously known faceplate having nine nozzles is depicted. When the faceplate is oriented as shown in the figure and moved along the 0°-180° (X) axis or the 90°-270° (Y) axis, all nine nozzles contribute to forming a contiguous swath and the swath has its greatest contiguous width. As used in this document, the term "0°-180° axis" means movement in either the 0° direction or the 180° direction with the faceplate of the extruder oriented so if all of the nozzles are open, then the widest contiguous swath that the extruder can produce is formed and the term "90°-270° axis" means movement in either the 90° or the 270° direction with the faceplate of the extruder oriented so if all of the nozzles are open, then the widest contiguous swath that the extruder can produce is formed.

When the faceplate remains oriented as shown on the 0°-180° axis and 90°-270° axis, but moved in one of the directions rotated 72° from one of these axis, as shown in the far right illustration, the nine nozzles become three rows of three nozzles that are aligned with one another and the swath is only three nozzles wide with gaps between the extruded lines forming the swath. Thus, the widest swaths are produced when the faceplate of FIG. 7 is moved along the 0°, 90°, 180°, and 270° paths and the swaths are most narrow and the beads of extruded material are most separated from one another along the 72°, 162°, 252°, and 342° paths. The separation between beads of material at these orientations occurs because the orientation of the faceplate and the direction of the relative movement between the extruder and the platform arranges the nozzles in the faceplate into an array having orthogonal columns and rows. This arrangement reduces the distance between the lines formed by the nozzles in the columns so the lines align with one another and separates the lines by the spacing between the nozzles in a row. In the center of an object where feature differentiation is usually unimportant, the faceplate movement is preferred to be in one of the directions producing the widest contiguous swaths so object formation speed can be maximized. At the outside edges of an object where feature shapes are more varied and sometimes intricate; however, fewer nozzles, and perhaps only a single nozzle, may be opened to enable formation of the features. Unfortunately, this type of extruder operation does not capitalize on the large number of nozzles available for object formation and is inherently slow. Thus, much of the speed advantage in having multiple nozzles in a common faceplate is lost and, for many parts, more time can be spent on the outline of the object than is spent on the formation of the interior of the object. To overcome this limitation, the speed of the extruder can be reduced so the extruded material has time to spread into the areas between beads but the slower speeds adversely impact the time required to produce an object. A three-dimensional object printer having multiple nozzles in a common faceplate that can exploit the number of available nozzles at the formation of object exteriors without significantly reducing the extruder speed would be beneficial.

### SUMMARY

A new multi-nozzle extruder includes a controller configured to operate an actuator to rotate the extruder about its center axis, which is perpendicular to the build platform, so the extruder can form exterior features without significantly reducing the speed of extruder movement. The apparatus includes a platform configured to support an object during manufacturing, an extruder having a plurality of nozzles and a plurality of valves, the valves being configured to open and close the nozzles independently of one another, at least one actuator operatively connected to the extruder, the at least one actuator being configured to move the extruder in an XY plane parallel with the platform and to rotate the extruder about an axis perpendicular to the XY plane, and a controller operatively connected to the extruder and the at least one actuator. The controller is configured to operate the at least one actuator to move the extruder in the XY plane and to rotate the extruder while the extruder is being moved in the XY plane.

Another embodiment of the apparatus operates an actuator to rotate a multi-nozzle extruder about its center axis, which is perpendicular to the build platform, so the extruder can form exterior features without significantly reducing the speed of extruder movement. The method includes a platform configured to support an object during manufacturing, an extruder having a plurality of nozzles and a plurality of valves, the valves being configured to open and close the nozzles independently of one another, at least one actuator operatively connected to the extruder, the at least one actuator being configured to move the extruder in an XY plane parallel with the platform and to rotate the extruder about an axis perpendicular to the XY plane up to a predetermined angle, and a controller operatively connected to the extruder and the at least one actuator. The controller is configured to operate the at least one actuator to move the extruder in the XY plane and to rotate the extruder while the extruder is being moved in the XY plane.

### BRIEF DESCRIPTION OF THE DRAWINGS

The foregoing aspects and other features of systems that form objects with thermoplastic material extruded from extruders while the extruder is being rotated are explained in the following description, taken in connection with the accompanying drawings.
FIG. 1 depicts an additive manufacturing system that controls rotation of an extruder as the extruder is moved to form swaths for object formation.
FIG. 2 depicts a path for a nine nozzle extruder forming a 60 degree corner with continuous movement while the extruder rotates through 120 degrees.
FIG. 3 depicts a path for a nine nozzle extruder forming a 60 degree corner with continuous movement while the extruder rotates through 90 degrees.
FIG. 4 depicts selective operation of nozzles in a nine nozzle extruder to form horizontal and vertical swaths.
FIG. 5 is an illustration of a faceplate layout made possible by configuring an extruder with a limited range of rotation while moving the extruder.
FIG. 6 depicts swaths that can be formed by a nine nozzle faceplate when oriented at 0°, 90°, and 72° and operated to stop for faceplate orientation in a known prior art manner.

### DETAILED DESCRIPTION

For a general understanding of the environment for the device disclosed herein as well as the details for the device, reference is made to the drawings. In the drawings, like reference numerals designate like elements.

As used herein, the term "extrusion material" refers to a material that is softened or melted to form thermoplastic material to be emitted by an extruder in an additive manufacturing system. The extrusion materials include, but are not strictly limited to, both "build materials" that form permanent portions of the three-dimensional printed object and "support materials" that form temporary structures to support portions of the build material during a printing process and are then optionally removed after completion of the printing process. Examples of build materials include, but are not limited to, acrylonitrile butadiene styrene (ABS) plastic, polylactic acid (PLA), aliphatic or semi-aromatic polyamides (Nylon), plastics that include suspended carbon fiber or other aggregate materials, electrically conductive polymers, and any other form of material that can be thermally treated to produce thermoplastic material suitable for emission through an extruder. Examples of support materials include, but are not limited to, high-impact polystyrene (HIPS), polyvinyl alcohol (PVA), and other materials capable of extrusion after being thermally treated. In some extrusion printers, the extrusion material is supplied as continuous elongated length of material commonly known as a "filament." This filament is provided in a solid form by one or more rollers pulling the extrusion material filament from a spool or other supply and feeding the filament into a heater that is fluidly connected to a manifold within the extruder. Although the illustrated examples use extrusion material that is supplied as filament to the heaters, other extrusion material supplies can be used, such as particulate or spherical ball extrusion materials. The heater softens or melts the extrusion material filament to form a thermoplastic material that flows into the manifold. When a valve positioned between a nozzle and the manifold is opened, a portion of the thermoplastic material flows from the manifold through the nozzle and is emitted as a stream of thermoplastic material. As used herein, the term "melt" as applied to extrusion material refers to any elevation of temperature for the extrusion material that softens or changes the phase of the extrusion material to enable extrusion of the resulting thermoplastic material through one or more nozzles in an extruder during operation of a three-dimensional object printer. As used in this document, the term "thermoplastic material" means extrusion material that has been melted. As those of skill in the art recognize, certain amorphous extrusion materials do not transition to a pure liquid state during operation of the printer.

As used herein, the terms "extruder" refers to a component of a printer that melts extrusion material in a single fluid chamber and provides the melted extrusion material to a manifold connected to one or more nozzles. Some extruders include a valve assembly that can be electronically operated to enable thermoplastic material to flow through nozzles selectively. The valve assembly enables the one or more nozzles to be connected to the manifold independently to extrude the thermoplastic material. As used herein, the term "nozzle" refers to an orifice in a faceplate of an extruder that is fluidly connected to the manifold in an extruder and through which thermoplastic material is emitted towards a material receiving surface. During operation, the nozzle can extrude a substantially continuous linear swath of the thermoplastic material along the process path of the extruder. A controller operates the valves in the valve assembly to control which nozzles connected to the valve assembly extrude thermoplastic material. The diameter of the nozzle affects the width of the line of extruded thermoplastic material. Different extruder embodiments include nozzles having a range of orifice sizes with wider orifices producing lines having widths that are greater than the widths of lines produced by narrower orifices.

As used herein, the term "manifold" refers to a cavity formed within a housing of an extruder that holds a supply of thermoplastic material for delivery to one or more nozzles in the extruder during a three-dimensional object printing operation. As used herein, the term "swath" refers to any pattern of the extrusion material that the extruder forms on a material receiving surface during a three-dimensional object printing operation. Common swaths include straightline linear arrangements of extrusion material and curved swaths. In some configurations, the extruder extrudes the thermoplastic material in a continuous manner to form the swath with a contiguous mass of the extrusion material in both process and cross-process directions, while in other configurations the extruder operates in an intermittent manner to form smaller groups of thermoplastic material that are arranged along a linear or curved path. The three-dimensional object printer forms various structures using combinations of different swaths of the extrusion material. Additionally, a controller in the three-dimensional object printer uses object image data and extruder path data that correspond to different swaths of extrusion material prior to operating the extruder to form each swath of extrusion material. As described below, the controller optionally adjusts the operation of the valve assembly and the rotation of the extruder to form multiple swaths of thermoplastic material through one or more nozzles during a three-dimensional printing operation.

As used herein, the term "process direction" refers to a direction of a straight line motion path between an extruder and a material receiving surface that receives thermoplastic material extruded from one or more nozzles in the extruder. The material receiving surface is either a support member that holds a three-dimensional printed object or a surface of the partially formed three-dimensional object during an additive manufacturing process. In the illustrative embodiments described herein, one or more actuators move the extruder about the support member, but alternative system embodiments move the support member to produce the relative motion in the process direction while the extruder remains stationary. Some systems use a combination of both systems for different axes of motion.

As used herein, the term "cross process direction" refers to an axis that is perpendicular to the process direction and parallel to the extruder faceplate and the material receiving surface. The process direction and cross-process direction refer to the relative path of movement of the extruder and the surface that receives the thermoplastic material. In some configurations, the extruder includes an array of nozzles that can extend in the process direction, the cross-process direction, or both. Adjacent nozzles within the extruder are separated by a predetermined distance in the cross-process direction. In some configurations, the system rotates the extruder to adjust the cross-process direction distance that separates different nozzles in the extruder to adjust the corresponding cross-process direction distance that separates the lines of thermoplastic material that are extruded from the nozzles in the extruder as the lines form a swath.

During operation of the additive manufacturing system, an extruder moves in the process direction along both straight and curved paths relative to a surface that receives thermoplastic material during the three-dimensional object printing process. Additionally, an actuator in the system optionally rotates the extruder about the Z axis to adjust the effective cross-process distance that separates nozzles in the extruder so the extruder forms two or more lines of thermoplastic material with predetermined distances between each line of the thermoplastic material. The extruder moves both along the outer perimeter to form outer walls of a two-dimensional region in a layer of the printed object and within the perimeter to fill all or a portion of the two-dimensional region with the thermoplastic material.

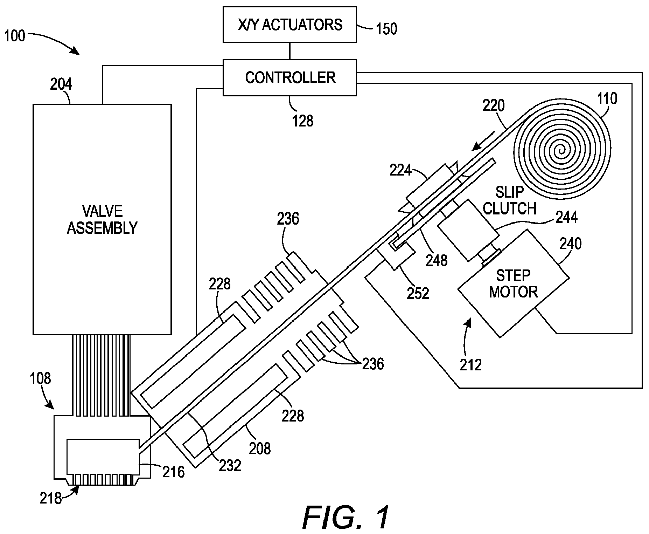

FIG. 1 depicts an additive manufacturing system 100 having an extruder 108 that extrudes a plurality of thermoplastic materials through nozzles in a faceplate as described in more detail below. Although the printer 100 is depicted as a printer that uses planar motion to form an object, other printer architectures can be used with the extruder and the controller configured to regulate the rotation of the extruder as described in this document. These architectures include delta-bots, selective compliance assembly robot arms (SCARAs), multi-axis printers, non-Cartesian printers, and the like. The motions in these alternative embodiments still have process and cross-process directions as defined above and the nozzle spacing in the extruders of these embodiments still define the nozzle spacing with respect to the cross-process direction. Only one manifold 216 is shown in FIG. 1 to simplify the figure, but the extruder 108 can have a plurality of manifolds 216. In one embodiment, each manifold 216 in the extruder 108 is operatively connected to a different heater 208 that is fed by a different extrusion material supply 110 in a one-to-one correspondence. Alternatively, each manifold 216 can be coupled to a single heater 208 that houses a plurality of channels 232 that are fed by a plurality of extrusion material supplies 110 as is known. Each channel in such an embodiment supplies thermoplastic material to a manifold in the extruder 108 so each manifold receives a material that is different than a material that the other manifolds are receiving. In the extruder 108 of FIG. 1, each nozzle 218 is fluidly connected to only one of the manifolds within the extruder 108 so each nozzle can extrude a thermoplastic material that is different than the materials extruded from nozzles connected to other manifolds. Extrusion from each nozzle is selectively and independently activated and deactivated by controller 128 operating the valves in the valve assembly 204. Each nozzle 218 terminates at a faceplate 260 so the thermoplastic material extruded from the nozzles can be manipulated by the faceplate for spreading.

In the embodiment of FIG. 1, a valve assembly 204 positions a valve between the manifolds in the extruder 108 and each of the nozzles connected to the manifolds in the extruder 108. The valve assembly 204 is operatively connected to the controller 128 so the controller can open and close the valves for extruding thermoplastic material from the plurality of nozzles in the extruder 108. Specifically, the controller 128 activates and deactivates different actuators in the assembly 204 connected to the valves in the extruder 108 to extrude thermoplastic material from the nozzles and form swaths of different thermoplastic materials in each layer of a three-dimensional printed object.

The system 100 of FIG. 1 also includes an extrusion material dispensing system 212 for each heater 208 that is connected to a manifold in the extruder 108. The extrusion material from each separate supply 110 is fed to the corresponding heater 208 at a rate that maintains the pressure of the thermoplastic material in the manifold connected to the heater within a predetermined range during operation of the system 100. The dispensing system 212 is one embodiment that is suitable for regulating pressure of the thermoplastic material in each manifold of the extruder 108. In the alternative embodiment previously discussed, a plurality of extrusion material dispensing systems 212 are operatively connected between a plurality of extrusion material supplies 110 and a channel 232 in the heater 208 in a one-to-one correspondence. Additionally, in both embodiments, the controller 128 is operatively connected to an actuator for each dispensing system 212 to control the rate at which the dispensing system 212 delivers extrusion material from a supply 110 to the heater fed by the supply. The heater 208 softens or melts the extrusion material 220 fed to the heater 208 via drive roller 224. Actuator 240 drives the roller 224 and is operatively connected to the controller 128 so the controller can regulate the speed at which the actuator drives the roller 224. Another roller opposite roller 224 is free-wheeling so it follows the rate of rotation at which roller 224 is driven. While FIG. 1 depicts a feed system that uses an electromechanical actuator and the driver roller 224 as a mechanical mover to move the filament 220 into the heater 208, alternative embodiments of the dispensing system 212 use one or more actuators to operate a mechanical mover in the form of a rotating auger or screw. The auger or screw moves solid phase extrusion material from a supply 110 in the form of extrusion material powder or pellets into a heater 208.

In the embodiment of FIG. 1, the heater has a body formed from stainless steel that includes one or more heating elements 228, such as electrically resistive heating elements, which are operatively connected to the controller 128. Controller 128 is configured to connect the heating elements 228 to electrical current selectively to soften or melt the filament of extrusion material 220 in the channel or channels within the heater 208. While FIG. 1 shows the heater 208 receiving extrusion material in a solid phase as solid filament 220, in alternative embodiments, the heater can receive the extrusion material in solid phase as powdered or pelletized extrusion material. Cooling fins 236 attenuate heat in the channels upstream from the heater. A portion of the extrusion material that remains solid in a channel at or near the cooling fins 236 forms a seal in the channel that prevents thermoplastic material from exiting the heater from any opening other than the connection to the manifold 216, which maintains a temperature that keeps the extrusion material in a thermoplastic state as it enters the manifold. The extruder 108 can also include additional heating elements to maintain an elevated temperature for the thermoplastic material within each manifold within the extruder. In some embodiments, a thermal insulator covers portions of the exterior of the extruder 108 to maintain a temperature within the manifolds within the extruder. Also, the regions around the nozzles are maintained at a temperature that keeps the material in a thermoplastic state so it does not begin solidifying as it travels to the apertures in the faceplate.

To maintain a fluid pressure of the thermoplastic material within the manifolds 216 within a predetermined range, avoid damage to the extrusion material, and control the extrusion rate through the nozzles, a slip clutch 244 is operatively connected to the drive shaft of each actuator 240 that feeds filament from a supply 110 to a heater. As used in this document, the term "slip clutch" refers to a device applies frictional force to an object to move the object up to a predetermined set point. When the range about the predetermined set point for the frictional force is exceeded, the device slips so it no longer applies the frictional force to the object. The slip clutch enables the force exerted on the filament 220 by the roller 224 to remain within the constraints on the strength of the filament no matter how frequently, how fast, or how long the actuator 240 is driven. This constant force can be maintained by either driving the actuator 240 at a speed that is higher than the fastest expected rotational speed of the filament drive roller 224 or by putting an encoder wheel 248 on the roller 224 and sensing the rate of rotation with a sensor 252. The signal generated by the sensor 252 indicates the angular rotation of the roller 224 and the controller 128 receives this signal to identify the speed of the roller 224. The controller 128 is further configured to adjust the signal provided to the actuator 240 to control the speed of the actuator. When the controller is configured to control the speed of the actuator 240, the controller 128 operates the actuator 240 so its average speed is slightly faster than the rotation of the roller 224. This operation ensures that the torque on the drive roller 224 is always a function of the slip clutch torque.

The controller 128 has a set point stored in memory connected to the controller that identifies the slightly higher speed of the actuator output shaft over the rotational speed of the roller 224. As used in this document, the term "set point" means a parameter value that a controller uses to operate components to keep the parameter corresponding to the set point within a predetermined range about the set point. For example, the controller 128 changes a signal that operates the actuator 240 to rotate the output shaft at a speed identified by the output signal in a predetermined range about the set point. In addition to the commanded speed for the actuator, the number of valves opened or closed in the valve assembly 204 and the torque set point for the clutch also affect the filament drive system 212 operation. The resulting rotational speed of the roller 224 is identified by the signal generated by the sensor 252. A proportional-integral-derivative (PID) controller within controller 128 identifies an error from this signal with reference to the differential set point stored in memory and adjusts the signal output by the controller to operate the actuator 240. Alternatively, the controller 128 can alter the torque level for the slip clutch or the controller 128 can both alter the torque level and adjust the signal with which the controller operates the actuator.

The slip clutch 244 can be a fixed or adjustable torque friction disc clutch, a magnetic particle clutch, a magnetic hysteresis clutch, a ferro-fluid clutch, an air pressure clutch, or permanent magnetic clutch. The clutch types that operate magnetically can have their torque set points adjusted by applying a voltage to the clutches. This feature enables the torque set point on the clutch to be changed with reference to print conditions. The term "print conditions" refers to parameters of the currently ongoing manufacturing operation that affect the amount of thermoplastic material required in the manifold for adequate formation of the object. These print conditions include the type of extrusion material being fed to the extruder, the temperature of the thermoplastic material being emitted from the extruder, the speed at which the extruder is being moved in the X-Y plane, the position of the feature being formed on the object, the angle at which the extruder is being moved relative to the platform, and the like.

In the embodiment shown in FIG. 1, the controller 128 is configured to transmit one or more signals to the actuator 154 to operate the actuator and rotate the extruder 108 about its Z axis, which is perpendicular to the XY plane of a build platform opposite the faceplate 260 and through the center nozzle of the faceplate. The actuator 154 is configured for up to about a 360 degree rotation of the extruder because the one or more manifold connections to the one or more heaters, the electrical connections to the heaters, and the motive force connections for the actuators that move the valves make that amount of rotation difficult to achieve without damaging the connections with the resulting twisting. The controller configuration that rotates the extruder efficiently for formation of exterior features with up to about 360 degrees of rotation is novel and previously unknown. In order to control the extruder, the programmed instructions, in one embodiment called gcode, include parameters for movement in X, Y, and Z axes, operation of the valves, and rotation of the extruder about the Z axis. For example, a gcode instruction takes the form of: G1 P511 X10.0 Y12.5 Z0.2 U180, which means that the controller opens and closes the valves to conform to the pattern corresponding to 511, which corresponds to the binary value 111111111 so all of the nozzles are opened, moves the extruder in the X, Y, and Z axes to the coordinates 10.0, 12.5, 0.2, and rotates the extruder to the 180 degrees position about the Z axis. This configuration enables an outer nozzle in the faceplate to form exterior features. Previously known extruders used the central nozzle to form the exterior features, which meant about only one-half of the nozzles of the extruder could be used at the outer perimeters of a layer. Since an outer nozzle can now be used most if not all of the nozzles can be used to form swaths at the exterior portions of an object. Additionally, some of the orientations of the extruder that enable use of most or all of the nozzles in the faceplate also allow the extruder to be moved at maximum speed. By both allowing maximum speed and broader swaths to be formed on the periphery of the object, construction of the object is achieved more quickly. This aspect is particularly important because more than half of the time spent on object construction occurs at the perimeter of the object.

As can be seen in FIG. 1, the heater extends at an angle from the extruder. Such a configuration imparts a moment of inertia to the extruder that affects its rate of rotation. Any extruder has a moment of inertia that may limit the speed of rotation and the movements described below. By rotating the extruder as it extrudes material, the impact on the time of rotation the extruder is reduced.

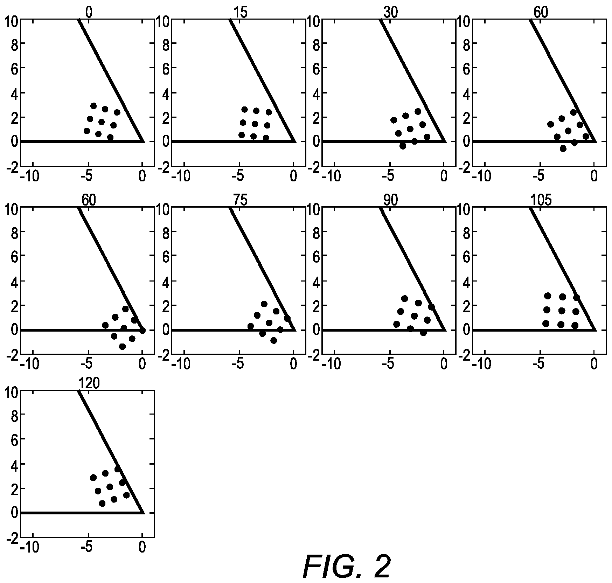

To help keep the most exterior nozzle outside of the perimeter while keeping the more interior nozzles within the perimeter of the corner being formed, the rotation of the extruder is commenced prior to reaching a turn in the perimeter and is terminated past the turn. The turn shown in FIG. 2 is one path for such continuous movement. In previously known systems, the extruder was stopped and rotated before continuing movement in a different direction. Now the extruder is rotated while it is moving so its orientation changes as it forms angled features in an object perimeter.

If an extruder could be rotated 360 degrees, the extruder would form a feature requiring rotation by beginning at one extreme of the rotation, rotate through the appropriate arc to the ending extreme of the rotation. To reverse the twisting of the connections to the extruder, the next feature would be formed by reversing the direction of extruder rotation to the beginning of the arc previously traversed. This requirement limits the angle at which the extruder is moving when a perimeter is being started or terminated, which typically means the extruder moves in the 0, 90, 180, and 270 degrees for perimeter starts and stops. Also, with an extruder that can rotate up to about 360 degrees, the extruder could be rotated as shown in FIG. 2 to form a 60-degree corner in the perimeter of an object. Beginning with the upper left situation and moving to the right before dropping to the next row at the left until the lower left situation is reached, the extruder is operated in the following manner. As the nine-nozzle extruder in the depicted orientation moves in the zero-degree direction toward the corner to be formed (shown in solid line), all of the nozzles are open. Open nozzles are shown as unfilled circles and closed nozzles are shown as solid circles. The controller 128 then operates the actuator 154 to rotate the extruder 108 fifteen degrees in the counter-clockwise direction so one row of the nozzles is on the line of approach to the corner with all of the nozzles still open. As the controller continues to operate the actuator to rotate the extruder another fifteen degrees, two of the nozzles are closed as they approach corner so they no longer extruder material before they are outside of the perimeter. After another fifteen degrees of rotation, the outermost nozzle of the frontmost row of nozzles reaches the apex of the corner and three of the nozzles are outside of the perimeter. Continuing to rotate the extruder another fifteen degrees places the middle nozzle of the frontmost row on the line exiting the corner and four of the nozzles are closed. After another fifteen-degree rotation, the outermost nozzle of the frontmost row returns to the line exiting the corner and three of the nozzles are now closed. Another fifteen-degree rotation keeps the outermost nozzle of the frontmost row of nozzles on the line leaving the corner while the backmost row of nozzles is outside of the perimeter and are closed. A rotation of another fifteen degrees again keeps the outermost nozzle on the line exiting the corner and the rearmost row is still outside of the perimeter. The final rotation of fifteen degrees brings all of the nozzles within the perimeter of the formed corner so they are all opened. This type of actuator operation continuously rotates the extruder through 120 degrees to form the corner and fill a portion of the interior of the corner with the other nozzles. This continuous rotation keeps the speed of the extruder at or near the nominal speed for extruder movement in the printer.

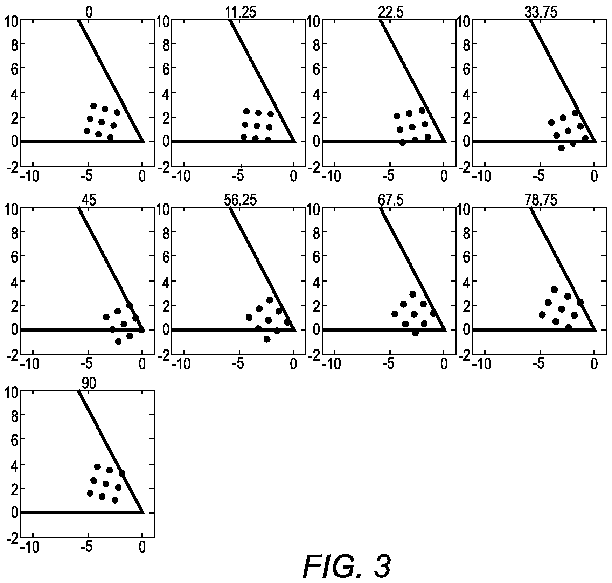

While such operation of an extruder is theoretical, the restraints noted previously constrain the degree to which an extruder can be rotated. FIG. 3 shows how a nine-nozzle extruder limited to ninety degrees of rotation can be controlled to form a sixty-degree corner without achieving the 120 degrees of rotation shown in FIG. 2. The process shown in FIG. 3 follows the process shown in FIG. 2 except the controller operates the actuator 154 to rotate the extruder through 90 degrees instead of 120 degrees. Once the corner is formed, the extruder is oriented facing a direction other than the direction of extruder movement in the X-Y plane. Thus, the final portion of the process is to rotate the extruder 60 degrees in the clockwise direction to align the extruder with the direction of movement.

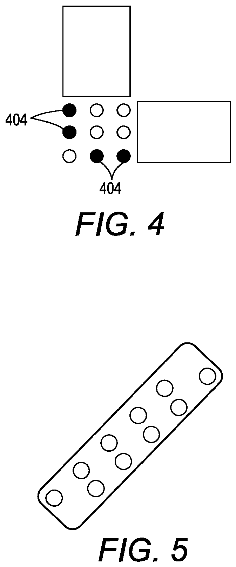

In some situations, the corners that need to be formed may require more extruder rotation than the actuator is configured to provide. In these scenarios, the extruder is rotated the maximum amount but during the turning those nozzles that fall outside of the perimeter are closed. While this closure affects the width of the swaths formed, it still enables the extruder to move continuously through the corner without stopping so object formation proceeds more quickly than in systems that do not rotate the extruder continuously while moving the extruder. During extruder rotation, the faceplate is oriented in the problematic angles of 72, 162, 252, and 342 degrees where the extruded material forms three separate lines. To compensate for this effect, the rate of rotation is increased to aid in the spreading of the extruded material and small translations in the XY plane can be incorporated during the rotation to help cover the passage through these problematic angles. Additionally, selective control of the nozzles can aid in compensating for the adverse effects that arise at these angles. As shown in FIG. 4, nozzles 404 are closed and the remaining nozzles are opened as the extruder approaches and exits a corner without slowing the speed of the extruder movement. Instead, only a short distance of slower movement is required after the extruder exits the corner so the extruder can be reoriented to a more optimal orientation for the path of the extruder's movement.

While the rotation of the extruder through angled features while continuing to move the extruder is most beneficial for perimeter formation, it also has benefits for infilling. Currently, the extruder is moved along the 0°-180° axis or the 90°-270° axis for infilling in an alternating fashion to form pairs of horizontal swaths and pairs of vertical swaths so no holes are provided through layers. By rotating the extruder to 45 degree and -45 degree orientations between the current alterations and moving the extruder at its maximum speed fill the interior more quickly and add structural integrity in a variety of directions not now possible with a multi-nozzle extruder.

Rotation of the extruder about the Z axis also provides greater flexibility in faceplate nozzle layouts. For example, the nozzle layout in FIG. 5 enables all of the nozzles to be opened when the extruder is moved along the 0°-180° axis and all of the nozzles except the first and last nozzles to be opened when the extruder is moved along the 90°-270° axis. By adding the ability to rotate the extruder 90 degrees, all of the nozzles can be opened when the extruder is moved along the 90°-270° axis. The layout shown in FIG. 5 has the advantage of presenting a smaller faceplate area, which reduces the drag produced by the extruder while it moves.

It will be appreciated that variants of the above-disclosed and other features and functions, or alternatives thereof, may be desirably combined into many other different systems, applications or methods. Various presently unforeseen or unanticipated alternatives, modifications, variations or improvements may be subsequently made by those skilled in the art that are also intended to be encompassed by the following claims.

## Claims

1. An apparatus comprising:
a platform configured to support an object during manufacturing;
an extruder having a plurality of nozzles and a plurality of valves, the valves being configured to open and close the nozzles independently of one another;
at least one actuator operatively connected to the extruder, the at least one actuator being configured to move the extruder in an XY plane parallel with the platform and to rotate the extruder about an axis perpendicular to the XY plane; and
a controller operatively connected to the extruder and the at least one actuator, the controller being configured to:
operate the at least one actuator to move the extruder in the XY plane and to rotate the extruder while the extruder is being moved in the XY plane.

2. The apparatus of claim 1 wherein the at least one actuator is configured to rotate the extruder up to a predetermined angle.

3. The apparatus of claim 2 wherein the predetermined angle is 360 degrees.

4. The apparatus of claim 2 wherein the predetermined angle is 180 degrees.

5. The apparatus of claim 2, the controller being further configured to:
selectively open and close nozzles in the extruder as the at least one actuator is being operated to move and rotate the extruder.

6. The apparatus of claim 5, the controller being configured to operate the at least one actuator to rotate the extruder while at least one nozzle of the extruder is open to form a portion of a perimeter of an object while all of the nozzles of the extruder remain within the perimeter being formed.

7. The apparatus of claim 5, the controller being configured to operate the at least one actuator to move the extruder along a curved path while at least one nozzle is open to form a swath and rotate the extruder while the extruder is moving along the curved path so the nozzles of the extruder remain equally spaced in a cross-process direction during movement along the curved path.

8. The apparatus of claim 5, the controller being further configured to:
vary a rate of rotation for the extruder as the at least one actuator is operated to move and rotate the extruder.

9. The apparatus of claim 8, the controller being further configured to:
increase the rate of rotation for the extruder as the extruder passes through predetermined orientations.

10. The apparatus of claim 5, the controller being further configured to:
operate the at least one actuator to reduce a speed of extruder movement after the extruder has exited a corner.

11. The apparatus of claim 5, the controller being further configured to:
operate the at least one actuator to orient the extruder at a predetermined orientation when a swath being formed by the extruder is placed within an interior portion of the object.

12. The apparatus of claim 11 wherein the predetermined orientation is other than a 0°-180° axis and a 90°-270° axis.

13. The apparatus of claim 11, the controller being further configured to:
operate the at least one actuator to rotate the extruder to the predetermined orientation while printing a portion of a perimeter prior to the extruder forming a corner in the perimeter.

14. The apparatus of claim 13, the controller being further configured to:
operate the at least one actuator to move the extruder along a path and rotate the extruder to return the extruder to the predetermined orientation while all of the nozzles of the extruder are closed.

15. The apparatus of claim 14, the controller being further configured to:
close nozzles in the extruder as the extruder is being rotated to form a corner in the perimeter prior to the nozzles that are being closed are outside the corner in the perimeter.

16. The apparatus of claim 15, the controller being further configured to:
open the nozzles in the extruder as the extruder is being rotated to form the corner of the perimeter after the nozzles that are being opened are inside the corner in the perimeter.

17. An apparatus comprising:
a platform configured to support an object during manufacturing;
an extruder having a plurality of nozzles and a plurality of valves, the valves being configured to open and close the nozzles independently of one another;
at least one actuator operatively connected to the extruder, the at least one actuator being configured to move the extruder in an XY plane parallel with the platform and to rotate the extruder about an axis perpendicular to the XY plane up to a predetermined angle; and
a controller operatively connected to the extruder and the at least one actuator, the controller being configured to:
operate the at least one actuator to move the extruder in the XY plane and to rotate the extruder while the extruder is being moved in the XY plane.

18. The apparatus of claim 17, the controller being further configured to:
selectively open and close nozzles in the extruder as the at least one actuator is being operated to move and rotate the extruder.

19. The apparatus of claim 18, the controller being configured to operate the at least one actuator to rotate the extruder while at least one nozzle of the extruder is open to form a portion of a perimeter of an object while all of the nozzles of the extruder remain within the perimeter being formed.

20. The apparatus of claim 18, the controller being configured to operate the at least one actuator to move the extruder along a curved path while at least one nozzle is open to form a swath and rotate the extruder while the extruder is moving along the curved path so the nozzles of the extruder remain equally spaced in a cross-process direction during movement along the curved path.
